(19) Europäisches Patentamt
European Patent Office
Office européen des brevets

(11) Publication number : **0 501 807 A2**

(12) # EUROPEAN PATENT APPLICATION

(21) Application number : **92301678.6**

(22) Date of filing : **27.02.92**

(51) Int. Cl.⁵ : **H04B 7/26, H04Q 7/04**

(30) Priority : **01.03.91 GB 9104393**

(43) Date of publication of application :
**02.09.92 Bulletin 92/36**

(84) Designated Contracting States :
**AT BE CH DE DK ES FR GR IT LI LU NL PT SE**

(71) Applicant : **VODAFONE LIMITED**
**The Courtyard, 2-4 London Road**
**Newbury, Berkshire RG13 1JL (GB)**

(72) Inventor : **McCombe, Michael John**
**1 Tyne Way**
**Thatcham, Newbury, Berkshire RG13 3DS (GB)**

(74) Representative : **Foster, David Martyn et al**
**MATHISEN MACARA & CO. The Coach House**
**6-8 Swakeleys Road**
**Ickenham Uxbridge UB10 8BZ (GB)**

(54) Channel granting in telecommunication networks and methods therefor.

(57)    A cellular telephone network provides cells P1,P2,P3... which serve the subscribers of more than one subscriber system ; e.g. a GSM system and a micro-cellular system. In order to prevent subscribers from one of the systems using all the available channels in any cell at any time, thus blocking out the other system, information is pre-stored for each cell defining the average proportion of the number of bids for channels from subscribers to each of the systems which can be granted at any particular time having regard to the number of channels available at the time of each such bid. In response to a bid from a subscriber to a particular one of the systems, the stored information relating to that system, and in accordance with the number of channels available at the time of that bid, is accessed, and a decision whether or not to grant the bid is made so as to maintain the actual average porportion of bids granted substantially in agreement with the pre-stored value. For example, in response to each such bid a pseudo-random number can be generated : if the value of this number is less than the value pre-stored for the average proportion of bids which can be granted, the bid is granted ; otherwise, the bid is blocked.

Fig.2.

EP 0 501 807 A2

The invention relates to telecommunications networks and methods by means of which a plurality of subscribers may communicate with each other. Embodiments of the invention to be described relate to telecommunications networks in the form of telephone networks and more especially to such networks involving mobiles (such as in a cellular network) which can communicate with each other and with fixed telephones. However, the invention may be applied to any other type of telecommunications network.

According to the invention, there is provided a telecommunications network serving a plurality of different subscribers and having a predetermined plurality of interconnection channels by means of which the subscribers can communicate via the network, and control means defining for each of a predetermined plurality of different types of requests or bids for channels the average proportion of the number of such bids of that type which can be granted having regard to the number of channels available at the time of each such bid.

According to the invention, there is further provided a cellular telephone network serving a plurality of different subscribers, each cell of the network having a predetermined total number of available channels, and including control means defining for each of a predetermined plurality of different types of requests or bids for channels from a subscriber, and for each cell, the average proportion of the number of such bids which can be granted having regard to the number of channels available in that cell at the time of each such bid.

According to the invention, there is also provided a method of operating a telecommunications network serving a plurality of different subscribers, the network having a predetermined plurality of interconnection channels by means of which the subscribers can communicate via the network, comprising the steps of pre- defining, for each of a predetermined plurality of different types of requests or bids for channels, the average proportion of the total number of such bids which can be granted having regard to the number of channels available at the time of each such bid.

Telecommunications networks embodying the invention and telecommunication methods according to the invention, will now be described, by way of example only, with reference to the accompanying diagrammatic drawings in which:

Figure 1 is a diagrammatic drawing of one of the networks;

Figure 2 is a diagrammatic drawing of another of the networks; and

Figure 3 is a block diagram for explaining the operation of the network of Figure 2.

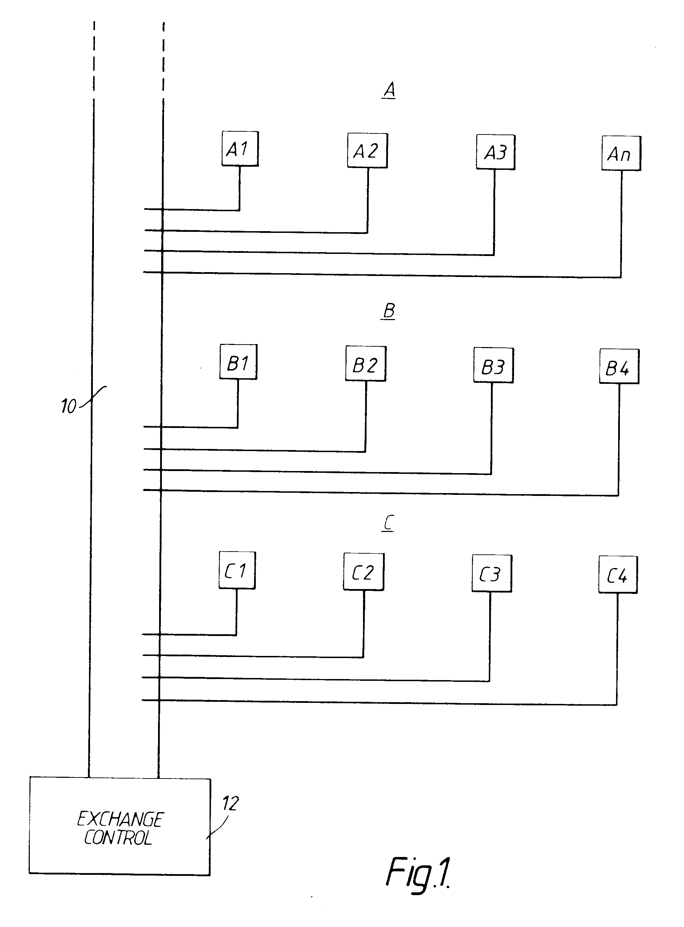

Figure 1 illustrates a somewhat generalised example of a network embodying the invention. As illustrated, the network serves a number of different subscribers. In the example illustrated, there are three separate subscriber systems and each subscriber subscribes to one of the systems. Thus, subscribers A1,A2,A3...An subscribe to system A, while subscribers B1,B2,B3....Bn subscribe to system B and subscribers C1,C2,C3.....Cn subscribe to system C. The systems may differ from each other in, for example, the type or quality of the service offered or the geographical area covered, or may be basically similar but providing competing services. However, all three systems use the same telecommunications network which is generally illustrated as a group 10 of channels which are controlled by an exchange control 12. Each of the subscribers in the systems A,B and C is connected into the group of channels 10 by a respective link, as illustrated. These links may be wire links or wireless links such as radio links, and the group of channels 10 may be wired or wireless channels or a combination of such channels.

There may be only two systems involved, instead of the three systems A,B and C illustrated, or more than three.

The network 10 may be arranged such that each subscriber in a particular system can only communicate, via the network, with other subscribers in his own system, or he may be able to communicate with subscribers in all, or perhaps only some, of the other systems.

The network 10 will in principle only have available a fixed number of intercommunication channels by which it can connect one subscriber to another. The network therefore incorporates means, now to be described, to prevent all, or too many, available intercommunication channels being used at any one time by the subscribers of just one of the systems; if that were to happen, the subscribers of the other systems would either be completely prevented from making calls or unacceptably limited in their call-making ability.

In order to achieve allocation of available channels between the subscribers of the different systems, the network stores (e.g., in the exchange control 12) information which pre-defines, for each possible number of available channels, the proportion of times that one such channel should be allocated to a subscriber of each of the systems, that is, the proportion between the total number of requests or "bids" for channels made by the subscriber and the number of such bids which should be granted. The information may be stored in tabular form:

## TABLE 1

| NO. OF AVAILABLE CHANNELS | SYSTEM A | SYSTEM B | SYSTEM C |
|---|---|---|---|
| 1 | 0.5 | 0.35 | 0.1 |
| 2 | 0.75 | 0.6 | 0.45 |
| 3 | 0.85 | 0.75 | 0.65 |
| 4 | 0.9 | 0.9 | 0.9 |
| 5 or more | 1.0 | 1.0 | 1.0 |

Thus, Table 1 shows that, if there is only one available channel, a subscriber from system A, bidding for the channel in order to make a call, should be allocated the channel in response to half its bids. A subscriber to system B, however, would be allocated the channel on only 0.35 of its bids, while a subscriber to system C would be allocated the channel only on 0.1 of its bids. As the number of available channels is increased, the proportion of times for which a subscriber to each of the systems can be allocated one channel in response to a bid increases as well, as shown in the Table.

In response to a bid from a subscriber to one of the systems for a channel, the exchange control 12 refers to the Table and makes a decision whether or not to allocate a channel to that subscriber, the decision whether to allocate a channel being made on the basis that the subscriber will not on average be allocated the channel more times than the proportion allowed by the Table. Such allocation could be done by maintaining, and continuously up-dating, a record of the bids for channels made by the subscribers of the different systems. Thus, each time a system A subscriber made a bid for a channel, this would be recorded along with the number of channels available at the time - and together with the decision made (whether or not to allocate the channel). Then, when that subscriber made a fresh bid for a channel, the information previously stored and concerning bids for channels made by subscribers to the same system and in the same circumstances (that is, the same number of channels available), would be accessed and the decision made accordingly. It would not of course be possible to comply exactly with the Table in the short term. Thus, for example, consider bids from subscribers to system A in the condition where there is one available channel. The system would have to be pre-programmed with the decision to be made when the first such bid is received; it could obviously be programmed either to grant the channel or not to do so. If it was pre-programmed to allocate the channel then, in response to the second bid, it would not do so - in order to maintain the average at 0.5. In response to the third bid, it would also not allocate the channel (because, to do so, would increase the average above 0.5 - to 0.66). In response to the fourth bid, a channel would be located, so as to maintain the average at 0.5. This process would continue - and a similar process would of course be employed for bids from subscribers to the other systems and also for bids in circumstances where other numbers of channels were available.

Another method which could be employed involves the generation of a random or pseudo-number between 0 and 1 in response to each bid. If this number is less than the relevant number in the Table above, the exchange control allocates a channel to the bidder. Thus, for example, in response to a bid for a channel from a subscriber to system A, in the circumstances in which there is one available channel, such a random number would be generated. If the number generated is less than 0.5, the channel would be allocated. Otherwise, the bid would be rejected and the channel would not be allocated. Obviously, the same procedure would be followed for bids from subscribers to the other systems and/or when there are other numbers of available channels. This method has the advantage over that described above in that it provides a more truly random allocation of channels.

It is not of course necessary for the pseudo-random number to be between 0 and 1 - if the numbers in the Table are adjusted accordingly. It may be more convenient, for example, to generate random numbers over a different range, and the values in the Table would be adjusted accordingly so as to correspond with this range.

It is a relatively simple matter to adjust the values in the Table to change the relative grades of service available to subscribers to the different systems, and such adjustment could be made (for example) in response to such factors as time of day or day of the week and the like. In addition, adjustments could be made adaptively, depending on the number of bids for channels being made by subscribers to the different systems. For example, if it is found that unexpectedly large numbers of bids for channels are being made by the subscribers to one of the systems, the values in the Table applicable to this system could be reduced so as to protect the channel availability for the other systems.

The network 10 could be or include a PSTN. The systems A,B,C could be of any suitable type. For example, they could be different types of mobile radio systems such as cellular systems. One could be the planned pan-European digital telephone system (GSM) and the others could be micro-cellular networks operated by different operators. All three systems A,B,C could be micro-cellular networks. However, many other arrangements are possible.

A more detailed example will now be considered.

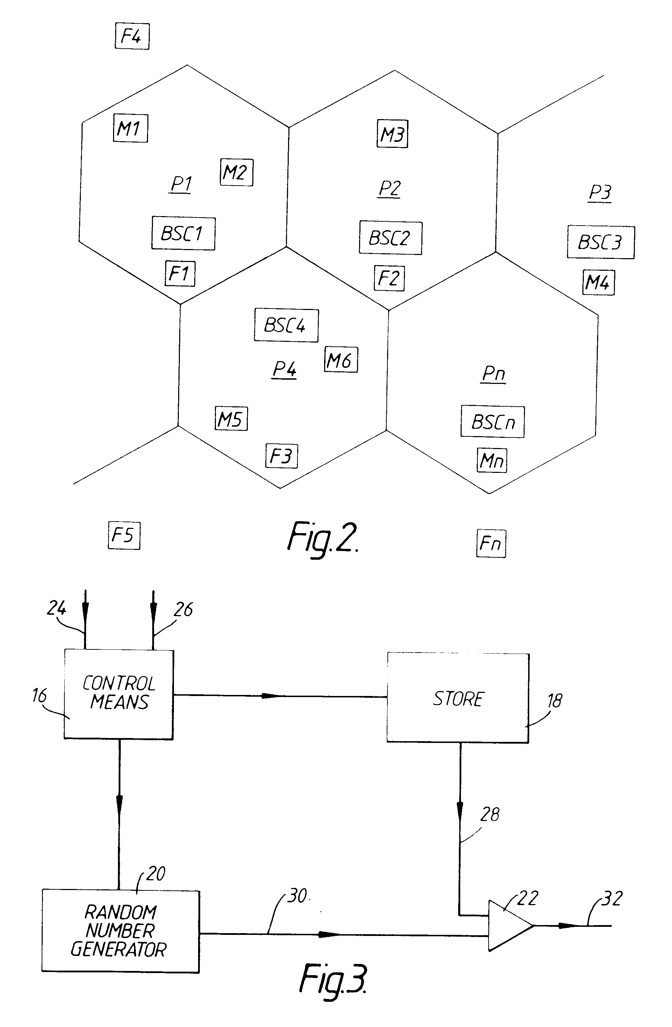

Figure 2 shows a cellular telephone network in diagrammatic form. The network provides geographical areas or "cells" P1,P2... Pn each served by a respective radio transmitter/receiver and controlled by a respective base station controller BSC1, BSC2...BSCn. Mobiles M1,M2...Mn moving within and between the cells can communicate with each other and with fixed telephones F1,F2...Fn in a PSTN in known manner by radio communication with the radio transmitter/receiver of the cell in which they are located, under control of the relevant base station controller. Thence they can communicate by radio link to a mobile in the same cell or via landline and corresponding radio link to a mobile in another cell (under control of its base station controller) or by landline to the PSTN and one of the fixed telephones.

The geographical extent of each cell P1, P2...Pn is dependent on the geographical conditions, and the characteristics of the radio transmitter/receiver in each cell and of the mobile and other factors. In practice, the cells will be of irregular and varying shape rather than the regular arrangement shown and the cells may well overlap.

Within each cell, a predetermined plurality of radio channels is available for use for calls, the cellular arrangement enabling frequencies to be re-used within the network provided that the power and geographical separation between re-used frequencies is such as to prevent interference.

As so far described, the cellular network is conventional. However, it will now be assumed that it serves subscribers to two different subscriber systems. For example, it will be assumed that it serves subscribers both to the planned pan-European digital telephone (GSM) and to a micro-cellular network (MCN).

Because each cell has available to it only a certain number of radio channels, it is necessary to ensure that neither one of the two systems (GSM and MCN in this example) can at any time use so many of the available channels in any cell that effective use of the cell by the other system is blocked.

Therefore, the network stores a Table (Table 2 below) similar to Table 1 above.

### TABLE 2

| NO. OF AVAILABLE CHANNELS | GSM | MCN |
|---|---|---|
| 1 | 0.5 | 0.1 |
| 2 | 0.8 | 0.5 |
| 3 | 0.9 | 0.9 |
| 4 or more | 1 | 1 |

Referring to Figure 3, the network includes network control means 16 which is connected to a data store 18, storing Table 2 above, and to a random number generator 20. The data store 18 and the random number generator 20 have outputs connected to a comparator 22. In response to a bid within any of the cells for a channel, the network control means 16 receives input signals on lines 24 and 26 indicating the identity of the system (GSM or MCN) on which the bid is being received and the number of channels available within the relevant cell. The network control means 16 therefore accesses the appropriate location in Table 2 in the data store 18 and the appropriate number value is extracted and fed to comparator 22 on line 28. In addition, the network control means 16 activates the random number generator and the resultant pseudo-random number generated is fed to the second input of comparator 22 on a line 30. In the manner explained above in relation to Figure 1, the comparator 22 produces an output on a line 32 permitting allocation of a channel to the subscriber if the value of the random number generated is less than the number received on line 28. Otherwise, the allocation of the channel is blocked.

If a bid for a channel is blocked in this way, the network may be arranged to hand the bid over to an adjacent cell which may be able to accept it. Such hand-over may be possible because of overlap between adjacent cells. The new cell would not accept the handed-over bid until this bid had been assessed in the same manner as above - that is, by reference to a stored Table corresponding to (or identical to) Table 2 above and with reference to the number of channels available in the new cell.

As described with reference to Figure 1, the arrangement of Figures 2 and 3 could also be such that the values in the Table could be adjusted to take account of such factors as time of day, time of week, changes in numbers of subscribers to the different systems, or adaptively in response to the number of bids actually made, or in response to other factors.

Clearly, the network must be able to distinguish calls from the various systems. GSM and MCN traffic can be distinguished by the fact that the GSM traffic has a station "class mark" less than or equal to 4, whereas MCN has a station class mark greater than 4. Other means of discriminating between the two systems can be used instead.

The foregoing description has described how the networks can achieve allocation of available channels between the subscribers of different subscriber systems all using the network. However, the network may also be arranged to allocate available channels between different operating modes of a single system (or of more than one system), as will now be explained with reference to Figure 2. In the following description, it will be assumed initially that the network of Figure 2 is serving subscribers to a single subscriber system - such as, for example, the GSM system.

Within such a network, bids for channels within any particular cell can arise in a variety of different ways, that is, they can be of a variety of different types. For example, a bid for a channel may be made by a mobile within the cell, wishing to make a call to a fixed telephone (or, indeed, to another mobile). In response to such a bid, the base station of the cell allocates a channel (assuming that one is available) and sets up the call in the usual way. A bid for a channel can also be made to the base station from outside the cell by a caller (such as from a fixed telephone forming part of a PSTN for example) who wishes to establish communication with a mobile within the cell. Again, the base station in the cell allocates a channel (assuming that one is available) and sets up the call accordingly.

A request for a channel can also arise when "hand-over" is taking place by movement of a mobile into the cell. Thus, when a mobile moves into the cell from an adjacent cell while it is actually making a call through a communication channel of the adjacent cell, the base station in the newly entered cell has to select a communications channel (assuming that one is available) and allocate it to the entering mobile.

Because there is a finite limit on the number of channels available in any cell, it may not be possible to allocate a communication channel in response to each bid. In a manner now to be explained, the nework is arranged to allocate channels in a pre-defined way, in dependence on the type of bid, so as to achieve optimum use of the network.

Therefore, the network store a Table (Table 3 below) for each cell, and of the same general type as Tables 1 and 2 above.

## TABLE 3

| NO. OF AVAILABLE CHANNELS | HANDOVER BIDS | OUTGOING CHANNEL BIDS | INCOMING CHANNEL BIDS |
|---|---|---|---|
| 1 | 0.5 | 0.35 | 0.1 |
| 2 | 0.75 | 0.6 | 0.45 |
| 3 | 0.85 | 0.75 | 0.65 |
| 4 | 0.9 | 0.9 | 0.9 |
| 5 or more | 1.0 | 1.0 | 1.0 |

Thus, this Table stores information which pre-defines, for each possible number of available channels, the proportion of times one such channel should be allocated in response to each of three different types of bids for channels. The Table shows that, if there is only one available channel, a "hand-over bid" (that is, a call handed over from an adjacent cell and requiring a communications channel) should be successful on half the occasions of such a bid. An "outgoing channel bid" (a bid for a channel by a mobile within the cell) should be allocated the channel on only 0.35 of the occasions of such a bid.

Finally, an "incoming channel bid" (a bid for a channel within the cell by a caller from outside the cell such as from a fixed telephone in a PSTN) should be allocated the channel on only 0.1 of the occasions of such a bid. As the number of available channels is increased, the proportion of times for which bids of each of the three types can be satisfied increases as well, as shown in the Table.

In this way, the best possible use can be made of available channels. For example, it is clearly important to satisfy hand-over bids so far as is possible, and in priority to outgoing channel bids or incoming channel bids. A hand-over bid is in respect of a call which is actually in process and it would be more unsatisfactory to refuse such a bid than to refuse bids of the other types; their refusal merely blocks the making of a new call and does not interrupt an existing call.

Table 3 can be implemented and operated in the manner described above with reference to Figure 3, using a random number generator in the manner described. Instead, however, other methods could be used such as the storage and counting method described above with reference to Figure 1.

The network described above with reference to Table 3 is assumed to be a network handling calls from a single subscriber system (only a GSM system, in this example). However, the network could be one handling calls to subscribers of more than one system such as, for example, subscribers to the GSM system and to an MCN system. In such an arrangement, Table 3 would be adjusted appropriately. For example, hand-over bids from a GSM subscriber be given a higher priority than hand-over bids from an MCN subscriber and similiarly for the other types of bids.

Figure 3 illustrates a hardware implementation of Tables 2 and 3. Instead, however, software implementations may be used.

The foregoing description, with reference to Figures 1,2 and 3, is intended to describe examples, only, of the many different ways in which the invention can be implemented and is not intended to be limiting in any way.

## Claims

1. A telecommunications network serving a plurality of different subscribers and having a predetermined plurality of interconnection channels by means of which the subscribers can communicate via the network, characterised by control means (12;16,18,20,22) defining, for each of a predetermined plurality of different types of requests or bids for channels the average proportion of the number of such bids of that type which can be granted having regard to the number of channels available at the time of each such bid.

2. A network according to claim 1, characterised in that at least part of at least some of the channels operate by radio.

3. A network according to claim 1 or 2, characterised in that it is at least partly cellular.

4. A network according to any preceding claim, characterised in that the bids of each of the said different types of bids are bids from subscribers to a respective one of a plurality of different subscriber systems.

5. A network according to claims 3 and 4, characterised in that one of the subscriber systems is a GSM system.

6. A network according to claim 5, characterised in that another of the subscriber systems is a microcellular system.

7. A network according to any one of claims 1 to 3, characterised in that the bids of each of the said different types of bids are bids of a respective type of origin.

8. A network according to claim 3, characterised in that the predetermined plurality of channels is made up of a predetermined total number of available channels for each cell (P1,P2.....) of the network.

9. A network according to claim 8, characterised in that the bids of each of the said different types of bids are bids of a respective type of origin.

10. A network according to claim 9, characterised in that each of the bids of one of the said types of origin is a hand-over bid, that is, a bid for a channel in a particular cell (P1,P2...) in respect of a communication currently in process via a communication channel in another cell (P1,P2...).

11. A network according to claim 9 or 10, characterised in that each of the bids of one of the said types of origin is an outgoing channel bid, that is, a bid for a channel from a subscriber within the cell (P1,P2...).

12. A network according to claim 9,10 or 11, characterised in that each of the bids of one of the said types of origin is an incoming channel bid, that is, a bid from outside a particular cell (P1,P2...) for a channel within that cell (P1,P2...) in order to commence a communication.

13. A network according to any one of claims 8 to 12, characterised in that the control means (12;16,18,20) includes storage means (18) for storing data identifying, for each possible number of available channels, a value for the said average proportion for each of the different types of bids, by accessing means (16) responsive to a bid for a channel of a particular one of the different types of bids and operative in dependence on the number of channels available at the time of that bid to access the corresponding value, and decision means (20,22) responsive to the accessed value to make the decision whether or not to allocate the channel in response to that bid.

14. A network according to claim 13, characterised in that the decision means comprises means for storing for each of the different types of bids the numbers of previous bids for channels of that type in relation to the number of channels available at the time of each such bid and, for each such bid, whether the decision was or was not to grant the bid, and by means operative in response to a current bid to access that stored information and the stored data relating to the said average proportion and to decide whether or not to grant the current bid in the manner necessary to maintain the actual average proportion in substantial agreement with the stored data relating thereto.

15. A network according to claim 13, characterised in that the decision means comprises means (20) operative in response to the bid to generate a random number in the same range of numbers as is covered by the said values in the stored data, and comparing means (22) for comparing the random number with the stored value appropriate to the bid and operative to grant the bid if the random number is less than the stored value.

16. A method of operating a telecommunications network serving a plurality of different subscribers, the network having a predetermined plurality of interconnection channels by means of which the subscribers can communicate via the network, characterised by the steps of pre-defining, for each of a predetermined plurality of different types of requests or bids for channels, the average proportion of the total number of

7

such bids which can be granted having regard to the number of channels available at the time of each such bid.

Fig.1.

F4

M1

M2

P1

BSC1

F1

M3

P2

BSC2

F2

P3

BSC3

M4

BSC4

M6

P4

Pn

M5

BSCn

F3

Mn

F5

Fn

*Fig.2.*

CONTROL
MEANS

STORE

RANDOM
NUMBER
GENERATOR

*Fig.3.*